# EUROPEAN PATENT APPLICATION

(11) **EP 4 629 040 A1**
(43) Date of publication of application: **08.10.2025**
(21) Application number: 25164911.7
(22) Date of filing: 20.03.2025
(51) Int. Cl.: G06F 3/048, G06F 9/451

(54) **DISPLAY CONTROL DEVICE, DISPLAY CONTROL METHOD, AND DISPLAY CONTROL PROGRAM**

(30) Priority: 02.04.2024 JP 2024059305
(71) Applicant: OMRON Corporation, Kyoto 600-8530 (JP)
(72) Inventor: YAMANAKA, Yuya, Kyoto, 617-0002 (JP)
(74) Representative: Eisenführ Speiser

(57) **Abstract**

A display control device 20 includes an input reception unit 21, a tip presentation unit 22, specific operation reception units 23, 24, and 25, and a tip display determination unit 26. The input reception unit 21 receives various kinds of information from the user via a keyboard. The tip presentation unit 22 presents operation guidance to the user when input is made via the keyboard. The specific operation reception units 23, 24, and 25 receive the input of specific operations indicating the user's tendency to respond to the operation guidance presented by the tip presentation unit 22. The tip display determination unit 26 determines whether or not to display subsequent operation guidance produced by the tip presentation unit 22, on the basis of the specific operations inputted to the specific operation reception units 23, 24, and 25.

## Description

### CROSS-REFERENCE TO RELATED APPLICATIONS

This application claims priority to Japanese Patent Application No. 2024-059305 filed on April 2, 2024. The entire disclosure of Japanese Patent Application No. 2024-059305 is hereby incorporated herein by reference.

### TECHNICAL FIELD

The present invention relates to a display control device, a display control method, and a display control program with which the display of tips is controlled when inputting characters on a display screen of a smartphone, a tablet terminal, or the like, for example.

### BACKGROUND ART

When inputting characters onto a display screen of a smartphone, tablet terminal, or the like, for example, in recent years tips are sometimes presented as a form of learning how to operate the device.

For instance, Patent Literature 1 discloses an information processing device that has a function of providing a user with operation guidance by displaying text or graphics or through audio, the device being equipped with a control means for evaluating a user's operation proficiency based on the timing of operations performed by the user immediately after operation guidance has been provided, and switching between providing and not providing operation guidance upon subsequent operations depending on the evaluated proficiency.

### CITATION LIST

### PATENT LITERATURE

Patent Literature 1: JP-A 2008-009808

### DISCLOSURE OF INVENTION

### TECHNICAL PROBLEM

However, the following problems is encountered with the above-mentioned conventional information processing device.

With the information processing device disclosed in the above publication, operation guidance is either provided or not depending on the user's level of proficiency.

However, with this method, the operation guidance will sometimes be unnecessary information for some users, regardless of their level of proficiency, and a user may feel dissatisfaction when presented with unnecessary information.

It is an object of the present invention to provide a display control device, a display control method, and a display control program with which operation guidance can be properly displayed in accordance with a user's response, without causing dissatisfaction to the user.

### TECHNICAL SOLUTION

The display control device according to the first invention is a display control device that controls the display of operation guidance displayed during the input of various kinds of information with an input device, the display control device comprising an input reception unit, a tip presentation unit, a specific operation reception unit, and a tip display determination unit. Various kinds of information are inputted to the input reception unit by a user via an input device. The tip presentation unit presents operation guidance to the user when an input is made via the input device. The specific operation reception unit receives a specific operation indicating a response tendency of the user for the operation guidance presented by the tip presentation unit, The tip display determination unit determines whether or not to display the subsequent operation guidance produced by the tip presentation unit, on the basis of the specific operation inputted to the specific operation reception unit.

Here, whether or not to display subsequent operation guidance is determined from the user's tendency to respond to the presentation of operation guidance (rejecting or accepting the display of the operation guidance) during input using the input device that inputs various kinds of information, such as letters or symbols, on the display screen of a smartphone, tablet terminal, PC (personal computer), car navigation system, etc., for example.

Here, the input device includes, for example, a device such as a keyboard or a mouse for inputting various kinds of information, such as characters and symbols, and in particular, the keyboard includes a physical keyboard and a screen keyboard (software keyboard).

The operation guidance presented by the tip presentation unit includes, for example, displaying "Press and hold to delete everything at once" above the delete key, or displaying "You can change the language" above the language change key.

Examples of a user's tendency to respond to operation guidance include a response that rejects the display of operation guidance, such as deleting the display of the operation guidance, disabling notification of the operation guidance, or halting the execution of a function when following operation guidance, or the opposite responses.

Consequently, for a user who does not need the operation guidance displayed on the display screen when inputting various kinds of information, it can be determined whether to stop or continue displaying subsequent operation guidance on the basis of the content of a specific operation that indicates a response tendency, so that unnecessary operation guidance will not continue to be displayed.

As a result, the operation guidance can be appropriately displayed to suit the user's response, without causing user dissatisfaction.

The display control device according to the second invention is the display control device according to the first invention, wherein the specific operation reception unit has a deletion instruction reception unit to which an operation of deleting the display of the operation guidance is inputted from the user as the specific operation.

Consequently, by detecting that the user has deleted the display of the operation guidance, it can be assumed that the user feels that the operation guidance is unnecessary, and the display of the operation guidance can be controlled so as to stop the display of operation guidance from that point on.

The display control device according to the third invention is the display control device according to the first or second invention, wherein the specific operation reception unit has a notification disable instruction reception unit to which an operation for turning off notification of the operation guidance is inputted from the user as the specific operation.

Consequently, by detecting that the user has turned off notifications of operation guidance, it can be assumed that the user feels that operation guidance is unnecessary, and the display of operation guidance can be controlled so as to stop the display of operation guidance from that point on.

The display control device according to the fourth invention is the display control device according to the first or second invention, wherein the specific operation reception unit has a function disable instruction reception unit to which an operation for stopping the execution of a function that is executed when following the operation guidance is inputted from the user as the specific operation.

Consequently, by detecting an operation that stops the execution of a function executed by the user in accordance with operation guidance, it can be assumed that the user feels that operation guidance is unnecessary, and the display of operation guidance can be controlled so as to stop the display of the operation guidance from that point on.

The display control device according to the fifth invention is the display control device according to the first or second invention, wherein, when the number of times a first specific operation included in the specific operation is inputted is at or over a specific threshold, the tip display determination unit determines not to perform the display of subsequent operation guidance produced by the tip presentation unit.

Consequently, for example, for a user who has repeatedly deleted operation guidance, if the number of these deletion operations is at or over a specific threshold, the display of subsequent operation guidance is stopped, thereby allowing the user to perform input operations without being annoyed by such guidance.

The display control device according to the sixth invention is the display control device according to the first or second invention, wherein, when the number of times a second specific operation included in the specific operation is detected is at or over a specific threshold, the tip display determination unit determines that the display of the operation guidance shall be a batch notification.

Consequently, for example, for a user who does not delete the display of operation guidance when inputting an operation, but does not execute that function (second specific operation), the text display of that operation guidance can be given as numbers or the like in a batch notification, and the user can click or tap on batch notification to display operation guidance only when it is needed.

The display control device according to the seventh invention is the display control device according to the sixth invention, further comprising a batch notification unit that gives the user a batch notification of the display of operation guidance.

Consequently, the text display of operation guidance can be displayed as numbers or the like in a batch notification, allowing the user to click or tap on the batch to display the operation guidance only when it is needed, without the operation guidance displayed on the display screen interfering with input operations.

The display control device according to the eighth invention is the display control device according to the first or second invention, wherein, when the number of times a specific operation is inputted is below a specific threshold value, the tip display determination unit determines to continue displaying the operation guidance produced by the tip presentation unit.

Consequently, for example, for a user who is performing an operation to delete operation guidance, if the number of deletion operations is below a specific threshold, it will not be possible to determine whether the user considers the operation guidance unnecessary at the time of input operation, so leaving the display as it is allows the operation guidance to be displayed in case the user should need it.

The display control device according to the ninth invention is the display control device according to the first or second invention, wherein, when a specific key operation is inputted to the input reception unit, the tip display determination unit starts determination processing for the display of subsequent operation guidance.

Consequently, control for determining whether or not to display operation guidance can be started when a specific key operation is inputted, such as holding down the delete key, inputting characters such as "-", "/" or "," in symbol key mode, or inputting numbers in number key mode, for example.

The display control device according to the tenth invention is the display control device according to the first or second invention, wherein the input device includes a keyboard or a mouse.

Consequently, it can be determined whether or not to display operation guidance when an operation input is received from a keyboard (physical or software) or mouse to input various kinds of information.

The display control method according to the eleventh invention is a display control method for controlling the display of operation guidance displayed during the input of various kinds of information with an input device, the display control method comprising an input reception step, a tip presentation step, a specific operation reception step, and a tip display determination step. In the input reception step, various kinds of information are inputted from a user to an input reception unit of the display control device via an input device. In the tip presentation step, the tip presentation unit of the display control device presents operation guidance to the user at the time of input via the input device. In the specific operation reception step, a specific operation indicating the user's tendency to respond to the operation guidance presented by the tip presentation unit is inputted to the specific operation reception unit of the display control device. In the tip display determination step, the tip display determination unit of the display control device determines whether or not to display subsequent operation guidance produced by the tip presentation unit on the basis of the specific operation inputted to the specific operation reception unit.

Here, for example, on the display screen of a smartphone, tablet terminal, PC (personal computer), car navigation system, etc., whether or not to display subsequent operation guidance is determined from the user's tendency to respond to the presentation of operation guidance (rejecting or accepting the display of the operation guidance) while inputting information using an input device that inputs various kinds of information such as letters or symbols.

Here, the input device includes, for example, a device such as a keyboard or a mouse for inputting various kinds of information such as letters or symbols, and in particular, the keyboard includes a physical keyboard and a screen keyboard (software keyboard).

The operation guidance presented by the tip presentation unit includes, for example, displaying "Press and hold to delete everything at once" above the delete key, or displaying "You can change the language" above the language change key.

Examples of a user's tendency to respond to operation guidance include responses that reject the display of operation guidance, such as deleting the display of operation guidance, disabling notification of operation guidance, or stopping the execution of a function when following the operation guidance, or the opposite responses.

Consequently, for a user who does not need the operation guidance displayed on the display screen when inputting various kinds of information, it can be determined whether to stop or continue displaying subsequent operation guidance on the basis of the content of a specific operation that indicates a response tendency, so that unnecessary operation guidance will not continue to be displayed.

As a result, operation guidance can be appropriately displayed to suit the user's response, without causing user dissatisfaction.

The display control program according to the twelfth invention is a display control program for controlling the display of operation guidance displayed during the input of various kinds of information with an input device, the program causing a computer to execute a display control method comprising an input reception step, a tip presentation step, a specific operation reception step, and a tip display determination step. In the input reception step, various kinds of information are inputted from a user to an input reception unit of the display control device via an input device. In the tip presentation step, the tip presentation unit of the display control device presents operation guidance to the user at the time of input via the input device. In the specific operation reception step, a specific operation indicating the user's tendency to respond to the operation guidance presented by the tip presentation unit is inputted to the specific operation reception unit of the display control device. In the tip display determination step, the tip display determination unit of the display control device determines whether or not to display subsequent operation guidance produced by the tip presentation unit on the basis of the specific operation inputted to the specific operation reception unit.

Here, for example, on the display screen of a smartphone, tablet terminal, PC (personal computer), car navigation system, etc., it is determined whether or not to display subsequent operation guidance on the basis of the user's tendency to respond to the presentation of operation guidance (rejecting or accepting the display of the operation guidance) while inputting information using an input device that inputs various kinds of information such as letters or symbols.

Here, the input device includes, for example, a device such as a keyboard or a mouse for inputting various kinds of information such as letters or symbols, and in particular, the keyboard includes a physical keyboard and a screen keyboard (software keyboard).

The operation guidance presented by the tip presentation unit includes, for example, displaying "Press and hold to delete everything at once" above the delete key, or displaying "You can change the language" above the language change key.

Examples of a user's tendency to respond to operation guidance include a response that rejects the display of operation guidance, such as deleting the display of the operation guidance, disabling notification of the operation guidance, or halting the execution of a function when following operation guidance, or the opposite responses.

Consequently, for a user who does not need the operation guidance displayed on the display screen when inputting various kinds of information, it can be determined whether to stop or continue displaying subsequent operation guidance on the basis of the content of a specific operation that indicates a response tendency, so that unnecessary operation guidance will not continue to be displayed.

As a result, the operation guidance can be appropriately displayed to suit the user's response, without causing user dissatisfaction.

### ADVANTAGEOUS EFFECTS

With the display control device of the present invention, operation guidance can be appropriately displayed to suit the user's response, without causing user dissatisfaction.

### BRIEF DESCRIPTION OF THE DRAWINGS

Fig. 1 is a control block diagram showing the configuration of a smartphone in which the display control device according to an embodiment of the present invention is installed;
Fig. 2 is a diagram showing an example of a software keyboard and operation guidance displayed on the display screen of the smartphone in Fig. 1;
Fig. 3 is a diagram showing an example of the display screen when the display of operation guidance in Fig. 2 is changed to batch notification;
Fig. 4 is a diagram showing an example in which other operation guidance is displayed after a function has been executed according to the operation guidance on the display screen in Fig. 2;
Fig. 5 is a diagram showing an example in which the display of operation guidance is stopped after operation guidance has been repeatedly deleted on the display screen of Fig. 2;
Fig. 6 is a flowchart showing the flow of processing to determine whether to present operation guidance, among the processing of the display control method performed by the display control device in Fig. 1; and
Fig. 7 is a flowchart showing the flow of processing to determine a user's response tendency, among the processing of the display control method performed by the display control device in Fig. 1.

### DETAILED DESCRIPTION OF THE PREFERRED EMBODIMENTS

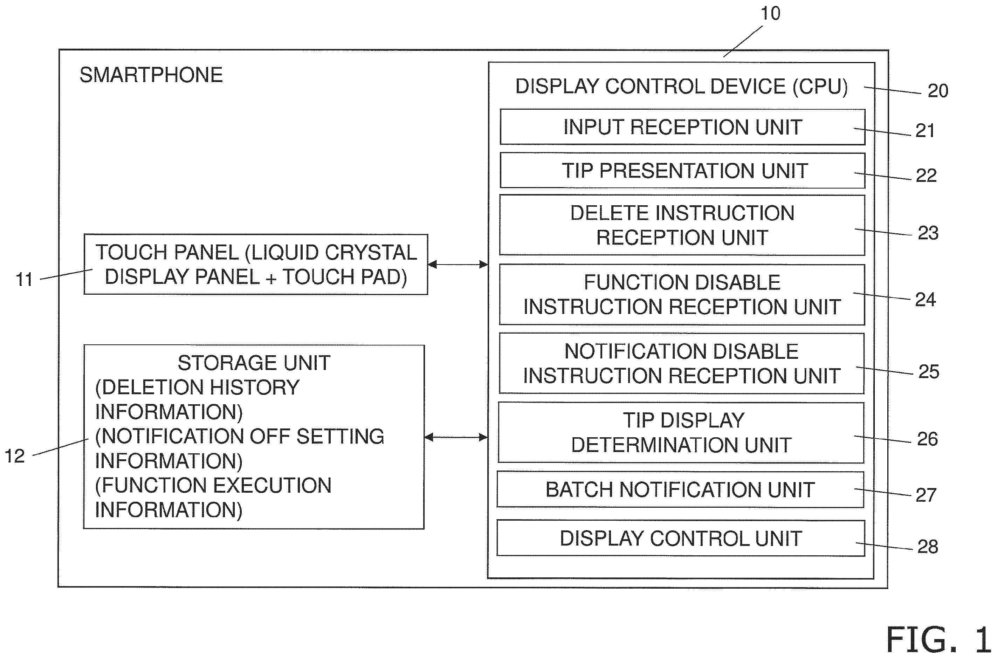

A display control device 20 according to an embodiment of the present invention, and a smartphone 10 in which this display control device 20 is installed, will now be described with reference to Figs. 1 to 7.

In this embodiment, some unnecessarily detailed description may be omitted. For example, detailed description of already known facts or redundant description of components that are substantially the same may be omitted. This is to avoid unnecessary repetition in the following description, and facilitate an understanding on the part of a person skilled in the art.

The applicant has provided the appended drawings and the following description so that a person skilled in the art might fully understand this disclosure, but does not intend for these to limit what is discussed in the patent claims.

### (1) Configuration of Smartphone 10

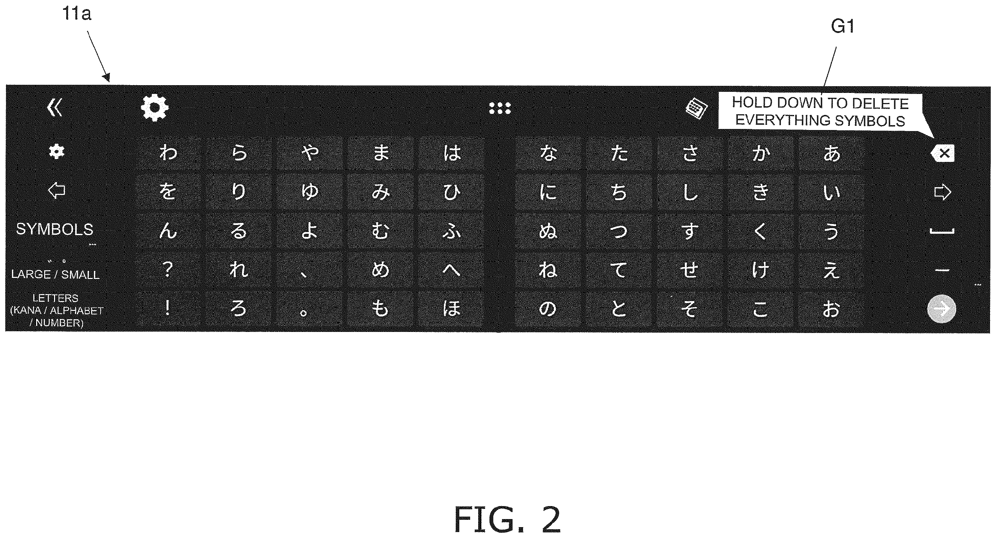

The smartphone 10 of this embodiment is an information processing terminal that inputs characters, symbols, etc., using a keyboard (software keyboard) 11a (see Fig. 2, etc.), and as shown in Fig. 1, the smartphone 10 is equipped with a touch panel (display unit) 11, a storage unit 12, and a display control device 20.

The touch panel (display unit) 11 displays various kinds of information, such as a screen showing the results of a search via the Internet, and also displays a keyboard 11a to receive operational inputs from the user.

The keyboard 11a is a software keyboard that is used for inputting characters by software and is realized on a computer screen, and letters, symbols, etc., are inputted by the user using the fingers, a mouse, etc.

The storage unit 12 is connected to the display control device 20, and stores deletion history information, notification off setting information, function execution information, etc., which are used to determine whether or not to display operation guidance (discussed below).

### (2) Configuration of Display Control Device 20

The display control device 20 according to this embodiment controls the display of various kinds of information displayed on the display screen of the smartphone 10, and also controls the display of operation guidance displayed when the keyboard 11a is used to input letters, symbols, etc. As shown in Fig. 1, the display control device 20 includes an input reception unit 21, a tip presentation unit 22, a deletion instruction reception unit (specific operation reception unit) 23, a function disable instruction reception unit (specific operation reception unit) 24, a notification disable instruction reception unit (specific operation reception unit) 25, a tip display determination unit 26, a batch notification unit 27, and a display control unit 28.

The input reception unit 21 receives information inputted via the keyboard 11a of the touch panel 11.

The tip presentation unit 22 displays operation guidance for assisting an input operation when information such as text is inputted with the keyboard 11a.

The operation guidance presented by the tip presentation unit 22 includes, for example, text information such as "Press and hold to delete everything at once," as shown in Fig. 2.

The deletion instruction reception unit (specific operation reception unit) 23 receives an instruction inputted by the user to delete the operation guidance displayed by the tip presentation unit 22 on the display screen displaying the keyboard 11a.

The function disable instruction reception unit (specific operation reception unit) 24 receives an instruction inputted by the user to disable a function to be executed according to the operation guidance displayed by the tip presentation unit 22 on the display screen displaying the keyboard 11a.

The notification disable instruction reception unit (specific operation reception unit) 25 receives an instruction inputted by the user to disable notification of the operation guidance displayed by the tip presentation unit 22 on the display screen displaying the keyboard 11a.

The tip display determination unit 26 determines whether or not to display subsequent operation guidance, and determines the display method, on the basis of the content and number of times the operation guidance displayed by the tip presentation unit 22 on the display screen showing the keyboard 11a has been accepted at the deletion instruction reception unit 23, the function disable instruction reception unit 24, and the notification disable instruction reception unit 25.

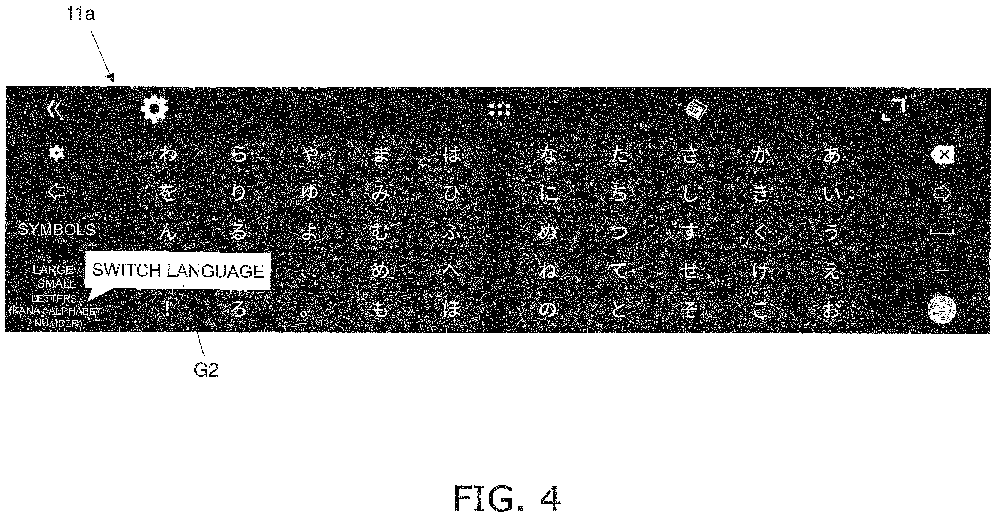

More specifically, when the number of times that a specific operation, such as deleting the display of operation guidance, has been inputted by the user is below a specific threshold, the tip display determination unit 26 assumes that the user does not feel that the display of the operation guidance is unnecessary, and decides to continue displaying the operation guidance produced by the tip presentation unit 22 thereafter (see operation guidance G1 and G2 in Figs. 2 and 4).

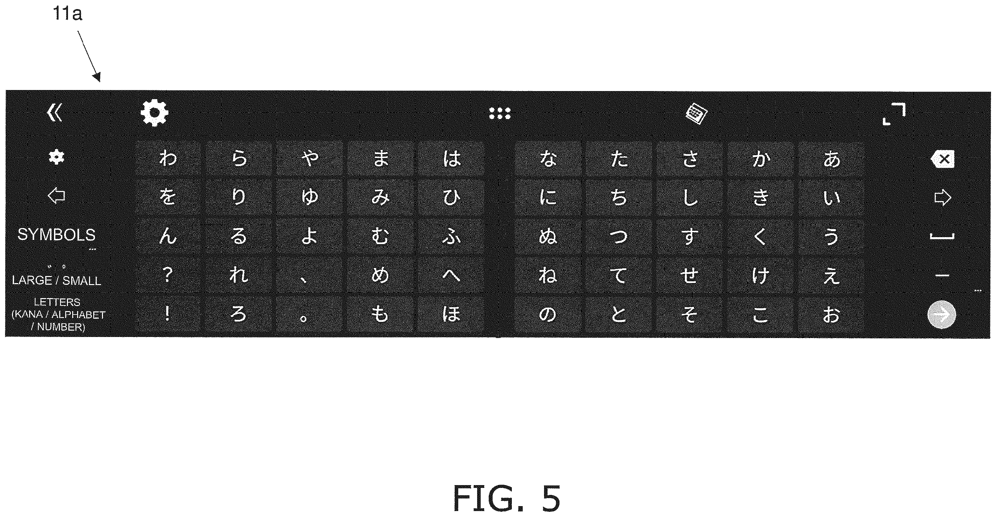

On the other hand, when the number of times that the user has inputted an operation (first specific operation), such as deleting the display of the operation guidance, is at or over a specific threshold value, the tip display determination unit 26 assumes that the user does not need the display of operation guidance and finds it annoying, and determines not to display any further operation guidance by the tip presentation unit 22 (see Fig. 5).

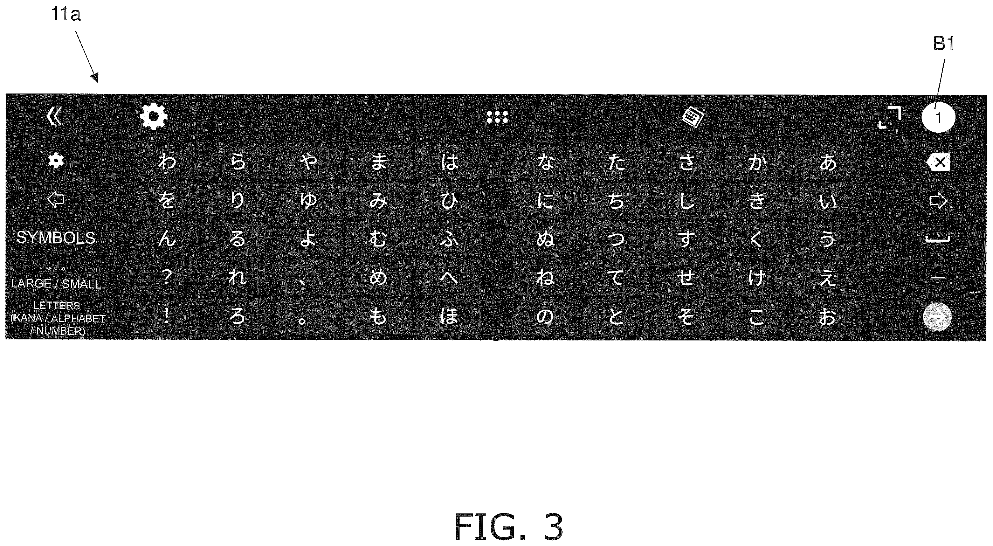

Furthermore, when the number of times that an operation (second specific operation) is detected in which the user does not delete the display of the operation guidance but has set the display method to batch notification is at or over a specific threshold, the tip display determination unit 26 assumes that the user does not consider the display of operation guidance to be unnecessary, but may use it as needed, and therefore switches the display of subsequent operation guidance produced by the tip presentation unit 22 to batch notification (see the batch notification B1 in Fig. 3).

The batch notification unit 27 gives notification by displaying a batch notification B1 showing numbers as shown in Fig. 3, as a preliminary step to displaying the operation guidance G1 and G2 shown in Figs. 2 and 4. This allows the user to check the operation guidance by operating the batch notification B1 only when necessary, without the character information of the operation guidance being displayed on the display screen.

The display control unit 28 controls the display of various kinds of information displayed on the display screen of the smartphone 10. The display control unit 28 displays the keyboard 11a on the display screen of the touch panel 11, and also displays the operation guidance G1 and G2 produced by the tip presentation unit 22, and the batch notification B1 produced by the batch notification unit 27.

### Display Control Method

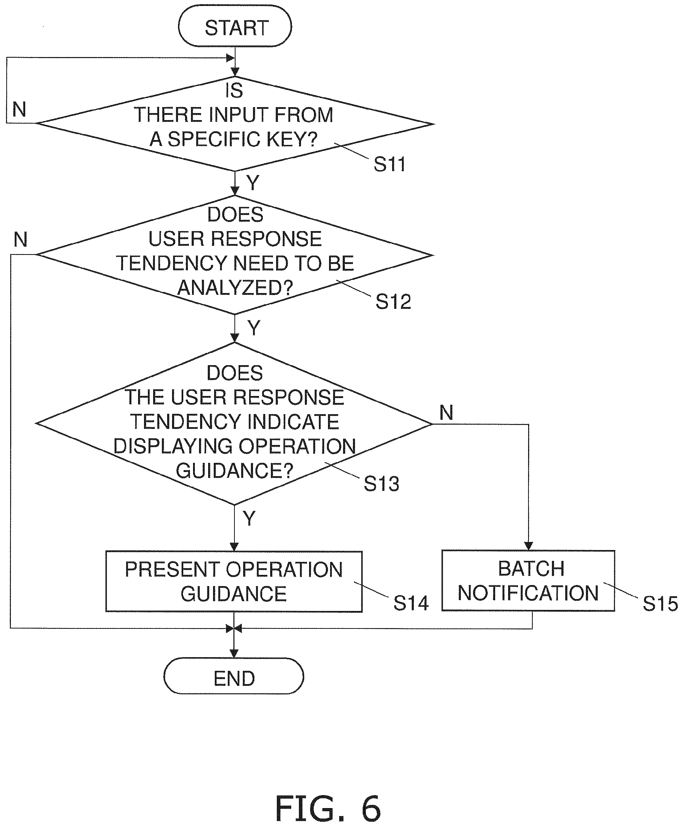

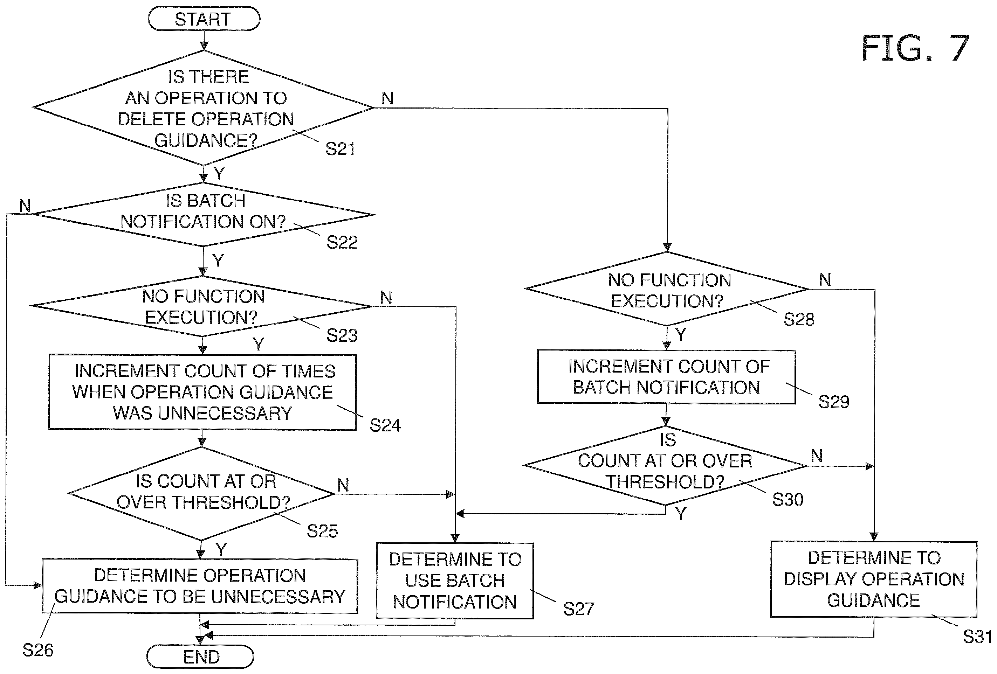

The display control device 20 of this embodiment has the configuration discussed above, and implements a display control method related to operation guidance displayed during input operations made on the keyboard 11a, according to the flowcharts shown in Figs. 6 and 7.

First, the flow of processing in the operation guidance display control method during the input of text or the like with the keyboard 11a will be described with reference to Fig. 6.

In step S11, the input reception unit 21 determines whether or not there has been an input operation on a specific key included in the keyboard 11a, and if there has been such an input, the processing proceeds to step S12.

Here, specific key operations include, for example, holding down the delete key, key input in symbol key mode of symbols such as "-", "/", or ",", inputting numbers in number key mode, etc. This specific key input can be made, for example, by holding down a key on a keyboard with Japanese character input or alphabetic input.

Next, in step S12, the tip display determination unit 26 determines whether or not a user response trend analysis is necessary by calling up the user response trend information in the storage unit 12. If the user response trend is deemed necessary, the processing proceeds to step S13, and otherwise the processing is ended.

Next, in step S13, with regard to the operation guidance displayed during the input of text or the like using the keyboard 11a, the user response tendency information in the storage unit 12 is called up to determine whether or not the user response tendency is "display." If the user response tendency is "display," the processing proceeds to step S14, but if it is "do not display" rather than "display," the processing proceeds to step S15.

Next, in step S14, since it was determined in step S13 that the user response tendency was "display," the display control unit 28 performs display control so that the tip presentation unit 22 continues to display operation guidance from that point on.

Next, in step S15, since it was determined in step S13 that the user response tendency was "do not display," the display control unit 28 performs display control so that the tip presentation unit 22 switches the subsequent display to batch notification by the batch notification unit 27.

Next, the display control according to a user's response tendency with respect to operation guidance displayed during the input of text or the like using the keyboard 11a will be described with reference to Fig. 7.

First, in step S21, the deletion instruction reception unit 23 determines whether or not the user has performed an operation to delete the operation guidance. If the user has performed a deletion operation, the processing proceeds to step S22, but if the user has not performed a deletion operation, the processing proceeds to step S27.

Next, in step S22, since it was determined in step S21 that the user had performed a delete operation, it is determined whether or not the user has inputted an operation to turn OFF batch notification. If batch notification remains ON, the processing proceeds to step S23, but if an operation to turn off batch notification has been inputted, the processing proceeds to step S26.

Next, in step S23, since it was determined in step S22 that batch notification was set to ON by the user, it is determined whether or not a function that is executed when the user follows the operation guidance has been executed. If this function was not executed, the processing proceeds to step S24, but if the function was executed, the processing proceeds to step S27.

Next, in step S24, since it was determined in step S23 that the function had not been executed, it is assumed that there is a high probability that the user does not feel it is necessary to display operation guidance, and the number of times operation guidance is unnecessary is counted.

Next, in step S25, it is determined whether the number of times counted in step S24 is at or above a specific threshold (such as 3 to 5 times). If the number of times counted is at or above the threshold, the processing proceeds to step S26, but if the number of times counted is below the threshold, the processing proceeds to step S27.

Next, in step S26, since it was determined in step S22 that the user had turned OFF batch notification, or it was determined in step S25 that the count had reached a specific threshold value or more, it is strongly assumed that the user does not want operation guidance to be displayed, and therefore it is determined that the display of operation guidance is unnecessary, and the tip presentation unit 22 stops displaying operation guidance from that point on, and the processing is ended. Also, the user response tendency information in the storage unit 12 is updated to "unnecessary."

On the other hand, in step S27, since it was determined in step S23 that the function had been executed, or it was determined in step S25 that the count was below the threshold value, the processing is not performed until the display of operation guidance by the tip presentation unit 22 is stopped, and the subsequent display of operation guidance is controlled to be switched to batch notification by the batch notification unit 27. Also, the user response tendency information in the storage unit 12 is updated to "do not display."

On the other hand, in step S28, since it was determined in step S21 that there was no input of an operation to delete operation guidance, it is determined whether or not a function to be executed when the operation guidance is followed has been executed. If this function has not been executed, the processing proceeds to step S29, but if the function has been executed, the processing proceeds to step S31.

Next, in step S29, since it was determined in step S28 that the function had not been executed, a count is started for switching to batch notification.

Next, in step S30, it is determined whether or not the count for switching to batch notification has reached a specific threshold value (such as 3 to 5 times) or more. If the count is at or above the threshold value, the processing proceeds to step S27, in which the batch notification unit 27 is controlled to switch the subsequent display of operation guidance to batch notification by the batch notification unit 27.

On the other hand, in step S31, since it was determined in step S28 that the function had been executed, or it was determined in step S30 that the count for switching to batch notification was below the specific threshold, it is assumed that the user has utilized operation guidance and will continue to need the operation guidance thereafter, and therefore the tip presentation unit 22 is controlled to continue displaying operation guidance from that point on. Also, the user response tendency information in the storage unit 12 is updated to "display."

### Main Features

The display control device 20 of this embodiment is a device that controls the display of operation guidance displayed during the input of various kinds of information with a keyboard, and includes the input reception unit 21, the tip presentation unit 22, the deletion instruction reception unit 23, the function disable instruction reception unit 24, the notification disable instruction reception unit 25, and the tip display determination unit 26. The input reception unit 21 receives various kinds of information from the user via a keyboard. The tip presentation unit 22 presents operation guidance to the user when input is made via the keyboard. The deletion instruction reception unit 23, the function disable instruction reception unit 24, and the notification disable instruction reception unit 25 receive specific operations that indicate the user's tendency to respond to the operation guidance presented by the tip presentation unit 22. The tip display determination unit 26 determines whether or not to display subsequent operation guidance produced by the tip presentation unit 22, on the basis of the specific operations inputted to the deletion instruction reception unit 23, the function disable instruction reception unit 24, and the notification disable instruction reception unit 25.

Consequently, for a user who does not need the operation guidance displayed on the display screen when inputting various kinds of information, it can be decided whether to stop or continue the display of subsequent operation guidance on the basis of the content of a specific operation that indicates a response tendency, so that unnecessary operation guidance will not continue to be displayed.

As a result, operation guidance can be appropriately displayed to suit the user's response, without causing dissatisfaction to the user.

### Other Embodiments

An embodiment of the present invention was described above, but the present invention is not limited to or by the above embodiment, and various modifications are possible without departing from the gist of the invention.

### (A)

In the above embodiment, an example was given in which the present invention was realized as a display control device and a display control method. However, the present invention is not limited to this.

For instance, the present invention may be realized as a display control program that causes a computer to execute the above-mentioned display control method.

This display control program is stored in a memory (storage unit) installed in the display control device, and the CPU reads the display control program stored in the memory and causes the hardware to execute the various steps. More specifically, the CPU reads the display control program and executes the various steps discussed above, which yields the same effect as above.

Also, the present invention may be realized as a recording medium on which a display control program is stored.

### (B)

In the above embodiment, an example was given in which, when the number of times a specific operation such as deleting the display of operation guidance was received was at or over a specific threshold, the display of subsequent operation guidance was stopped. However, the present invention is not limited to this.

For instance, even if a specific operation such as deleting the display of operation guidance is performed for the first time, display control may be performed to stop any subsequent operation guidance.

### (C)

In the above embodiment, an example was given that related to display control of operation guidance when various kinds of information were inputted with a software keyboard displayed on the display screen of the smartphone 10, as an input device. However, the present invention is not limited to this.

For instance, various kinds of information may be inputted using some other input device, such as a physical keyboard or a mouse, instead of a software keyboard.

### (D)

In the above embodiment, an example was given in which the specific operation was an instruction to stop displaying operation guidance, a setting to turn off notifications, and stopping the execution of a function, but the present invention is not limited to this.

For instance, an operation other than those mentioned above may be accepted as a specific operation, and a decision may be made regarding the display of subsequent operation guidance.

### (E)

In the above embodiment, an example was been given that related to controlling the display of operation guidance when character information is inputted, but the present invention is not limited to this.

For instance, the various kinds of information inputted with an input device may be other information, such as numbers, symbols, images, etc., instead of character information.

### (F)

In the above embodiment, an example was given in which the display control device 20 according to the present invention was installed in the smartphone 10. However, the present invention is not limited to this.

For instance, the display control device of the present invention may be installed in various devices other than a smartphone, such as a tablet terminal, a PC (personal computer), a car navigation system, or the like, on the display screens of which input operations are performed.

### Additions:

The display control device according to the first invention is:
a display control device that controls the display of operation guidance displayed during the input of various kinds of information using an input device, comprising:
an input reception unit into which various kinds of information are inputted by a user via the input device;
a tip presentation unit that presents the operation guidance to the user when an input is made via the input device;
a specific operation reception unit that receives a specific operation indicating a response tendency of the user for the operation guidance presented by the tip presentation unit; and
a tip display determination unit that determines whether or not to display the subsequent operation guidance produced by the tip presentation unit, on the basis of the specific operation inputted to the specific operation reception unit.

The display control device according to the second invention is the display control device according to the first invention,
wherein the specific operation reception unit has a deletion instruction reception unit to which an operation of deleting the display of the operation guidance is inputted from the user as the specific operation.

The display control device according to the third invention is the display control device according to the first or second invention,
wherein the specific operation reception unit has a notification disable instruction reception unit to which an operation for turning off notification of the operation guidance is inputted from the user as the specific operation.

The display control device according to the fourth invention is the display control device according to any of the first to third inventions,
wherein the specific operation reception unit has a function disable instruction reception unit to which an operation for stopping the execution of a function that is executed when following the operation guidance is inputted from the user as the specific operation.

The display control device according to the fifth invention is the display control device according to any of the first to fourth inventions,
wherein, when the number of times a first specific operation included in the specific operation is inputted is at or over a specific threshold, the tip display determination unit determines not to perform the display of subsequent operation guidance produced by the tip presentation unit.

The display control device according to the sixth invention is the display control device according to any of the first to fifth inventions,
wherein, when the number of times a second specific operation included in the specific operation is detected is at or over a specific threshold, the tip display determination unit determines that the display of the operation guidance shall be a batch notification.

The display control device according to the seventh invention is the display control device according to the sixth invention,
wherein the display device further comprises a batch notification unit that gives the user a batch notification of the display of operation guidance.

The display control device according to the eighth invention is the display control device according to any of the first to seventh inventions,
wherein, when the number of times the specific operation has been inputted is below a specific threshold value, the tip display determination unit determines to continue displaying the operation guidance produced by the tip presentation unit.

The display control device according to the ninth invention is the display control device according to any of the first to eighth inventions,
wherein, when a specific key operation is inputted to the input reception unit, the tip display determination unit starts determination processing for the display of subsequent operation guidance.

The display control device according to the tenth invention is the display control device according to any of the first to ninth inventions,
wherein the input device includes a keyboard or a mouse.

### INDUSTRIAL APPLICABILITY

The display control device of the present invention exhibits the effect of allowing operation guidance to be appropriately displayed according to the user's response, without causing dissatisfaction to the user, and as such can be broadly applied to various devices, such as a device for inputting various kinds of information such as text.

### EXPLANATION OF REFERENCE

10 smartphone
11 touch panel
11a keyboard
12 storage unit
20 display control device
21 input reception unit
22 tip presentation unit
23 delete instruction reception unit (specific operation reception unit)
24 function disable instruction reception unit (specific operation reception unit)
25 notification disable instruction reception unit (specific operation reception unit)
26 tip display determination unit
27 batch notification unit
28 display control unit
B1 batch notification
G1, G2 operation guidance

## Claims

1. A display control device that controls the display of operation guidance displayed during an input of various kinds of information with an input device, the display control device comprising:
an input reception unit into which various kinds of information are inputted by a user via the input device;
a tip presentation unit configured to present the operation guidance to the user when an input is made via the input device;
a specific operation reception unit configured to receive a specific operation indicating a response tendency of the user for the operation guidance presented by the tip presentation unit; and
a tip display determination unit configured to determine whether or not to display a subsequent operation guidance produced by the tip presentation unit, on the basis of the specific operation inputted to the specific operation reception unit.

2. The display control device according to claim 1,
wherein the specific operation reception unit has a deletion instruction reception unit to which an operation of deleting the display of the operation guidance is inputted from the user as the specific operation.

3. The display control device according to claim 1 or 2,
wherein the specific operation reception unit has a notification disable instruction reception unit to which an operation for turning off notification of the operation guidance is inputted from the user as the specific operation.

4. The display control device according to any of claims 1 to 3,
wherein the specific operation reception unit has a function disable instruction reception unit to which an operation for stopping an execution of a function that is executed when following the operation guidance is inputted from the user as the specific operation.

5. The display control device according to any of claims 1 to 4,
wherein the tip display determination unit determines not to perform the display of subsequent operation guidance produced by the tip presentation unit when number of times a first specific operation included in the specific operation is inputted is at or over a specific threshold.

6. The display control device according to any of claims 1 to 5,
wherein the tip display determination unit determines that the display of the operation guidance shall be a batch notification when number of times a second specific operation included in the specific operation is detected is at or over a specific threshold.

7. The display control device according to claim 6,
further comprises a batch notification unit configured to give the user a batch notification of the display of operation guidance.

8. The display control device according to any of claims 1 to 7,
wherein, when number of times the specific operation has been inputted is below a specific threshold value, the tip display determination unit determines to continue displaying the operation guidance produced by the tip presentation unit.

9. The display control device according to any of claims 1 to 8,
wherein, when a specific key operation is inputted to the input reception unit, the tip display determination unit starts determination processing for the display of subsequent operation guidance.

10. The display control device according to any of claims 1 to 9,
wherein the input device includes a keyboard or a mouse.

11. A display control method for controlling the display of operation guidance displayed during an input of various kinds of information with an input device, the display control method comprising:
an input reception step in which various kinds of information are inputted from user to an input reception unit of a display control device via the input device;
a tip presentation step in which a tip presentation unit of the display control device presents the operation guidance to the user when an input is made via the input device;
a specific operation reception step in which a specific operation indicating a response tendency of the user to the operation guidance presented by the tip presentation unit is inputted into a specific operation reception unit of the display control device; and
a tip display determination step in which a tip display determination unit of the display control device determines whether or not to display subsequent operation guidance produced by the tip presentation unit on the basis of the specific operation inputted to the specific operation reception unit.

12. A display control program for controlling the display of operation guidance displayed during an input of various kinds of information with an input device, the program causing a computer to execute a display control method comprising:
an input reception step in which various kinds of information are inputted from user to an input reception unit of a display control device via the input device;
a tip presentation step in which a tip presentation unit of the display control device presents the operation guidance to the user when an input is made via the input device;
a specific operation reception step in which a specific operation indicating a response tendency of the user to the operation guidance presented by the tip presentation unit is inputted into a specific operation reception unit of the display control device; and
a tip display determination step in which a tip display determination unit of the display control device determines whether or not to display subsequent operation guidance produced by the tip presentation unit on the basis of the specific operation inputted to the specific operation reception unit.
